# FASCICULE DE BREVET EUROPEEN

(11) **EP 0 434 509 B1**
(45) Date de publication et mention de la délivrance du brevet: **24.11.1993**
(21) Numéro de dépôt: 90403560.7
(22) Date de dépôt: 12.12.1990
(51) Int. Cl.: F02K 9/44, F02K 9/50, G01F 23/24, B64G 1/40

(54) **Dispositif d'alimentation en ergol liquide pour véhicule spatial, adapté à la prédiction de sa fin de vie**
Propergolflüssigkeitszufuhrvorrichtung für Raumfahrzeug mit Entleerungswarnung
Liquid propergol supply system for space vehicle capable of predicting its exhaustion

(30) Priorité: 22.12.1989 FR 8917128
(43) Date de publication de la demande: 26.06.1991
(73) Titulaire: AEROSPATIALE Société Nationale Industrielle, 75781 Paris Cédex 16 (FR)
(72) Inventeur: Perdu, Michel, F-83600 Fréjus (FR)
(74) Mandataire: Rinuy, Santarelli

(56) Documents cités:
- FR-A- 2 537 544
- FR-A- 2 635 499
- US-A- 3 734 348
- US-A- 4 657 210
- IBM TECHNICAL DISCLOSURE BULLETIN. vol. 24, no. 5, octobre 1981, NEW YORK USpages 2328 - 2329; V.N. KATHWATY: "Indirectly heated leak detector"
- JOURNAL OF SPACECRAFT AND ROCKETS. vol. 18, no. 4, août 1981, NEW YORK US D.D.SCHMIT: "Longlife bypropellant system demonstration,Viking orbiter propulsionsystem"

## Description

La présente invention concerne un dispositif d'alimentation en ergol liquide destiné à un satellite, et s'applique particulièrement aux satellites géostationnaires à vocation commerciale.

Quel que soit le système de propulsion utilisé pour maintenir à poste et dans une attitude correcte un satellite géostationnaire, ce satellite n'est plus utilisable à partir de l'instant où le (ou les) ergol(s) stocké(s) dans le (ou les) réservoir(s) du dispositif d'alimentation est(sont) épuisé(s).

Maints dispositifs ont été imaginés jusqu'à ce jour qui permettent de connaître avec plus ou moins de précision : soit le volume résiduel d'ergols dans le (ou les) réservoir(s) à un instant donné, soit l'instant où le (ou les) réservoir(s) se vide(nt).

Dans la première catégorie entrent tous les dispositifs de mesure volumétrique en gravité nulle ou très réduite, et dans la deuxième tous les dispositifs de détection de bulles gazeuses en sortie des réservoirs.

Une troisième catégorie de dispositifs de détection de fin de vie associe un dispositif de la première ou plutôt de la seconde catégorie et un (ou des) petit(s) réservoir(s) supplémentaire(s) assurant juste la déorbitation du satellite, ce (ou ces) réservoir(s) étant placé(s) en parallèle ou en série avec le (ou les) réservoir(s) principal(aux).

Les inconvénients des dispositifs de première catégorie tiennent à leur complexité due à la recherche de précision, et les inconvénients des dispositifs de deuxième et troisième catégories sont liés à la nécessité de détecter les toutes premières bulles.

Du fait que la date de fin de mission n'est connue que le jour même où cette fin se produit, il n'est plus alors possible de prendre de quelconques mesures pour la poursuite de cette mission, pour par exemple réoptimiser un réseau de télécommunications par satellites.

L'invention a pour objet de pallier les inconvénients liés à ces solutions antérieures et de permettre une détection aisée et fiable de la proximité de l'épuisement complet d'au moins un des ergols de propulsion du satellite, à un moment où il reste encore une quantité donnée connue à l'avance de cet ergol.

Elle propose à cet effet un dispositif d'alimentation en ergol liquide pour satellite comportant, une conduite amont connectée à une source de gaz de pressurisation, une conduite aval connectée à un collecteur de distribution d'ergol et une capacité principale connectée en un orifice amont à cette conduite amont et en un orifice aval à cette conduite aval, et contenant un dispositif de rétention d'ergol à effet capillaire entre l'intérieur de cette capacité principale et cette conduite aval, ce dispositif étant caractérisé en ce qu'il comporte en outre, sur la conduite aval, à partir de la capacité principale, un dispositif de test de gaz adapté à détecter la présence dans la conduite aval d'une quantité sensible de gaz, puis une capacité auxiliaire sensiblement plus petite que la capacité principale et comportant un deuxième dispositif de rétention d'ergol à effet capillaire séparant l'intérieur de cette capacité auxiliaire et le collecteur de distribution.

L'invention permet ainsi de se débarrasser des inconvénients liés aux procédés antérieurs grâce à :
1. un dispositif très simple de détection de gaz qui permet de détecter qu'une zone de test peu volumineuse en aval du (ou des) réservoir(s) principal(aux) du système de propulsion devient vide d'ergols,
2. un réservoir supplémentaire ou auxiliaire en aval de cette zone de test, assurant six mois à un an de durée de vie puis la déorbitation du satellite après la détection de vide d'ergol dans cette zone de test. Ce réservoir supplémentaire placé en série avec le (les) réservoir(s) principal(aux) comprend un dispositif de rétention d'ergols simplifié à auto-remplissage.

Les avantages du dispositif selon l'invention sont liés au fait que seule la détection de vide d'ergols (ou du moins de très grosses bulles de gaz pressurisant) est nécessaire, et qu'on évite donc l'électronique embarquée lourde et complexe spécifiquement dédiée à un dispositif de détection de fines bulles nécessaire dans les seconde et troisième catégories précitées.

L'intérêt du (ou des) réservoir(s) auxiliaire(s) est lié aux fait qu'il(s) est(sont) protégé(s) des accélérations au décollage et pendant la circularisation de l'orbite par le dispositif de rétention d'ergols dont le (ou les) réservoir(s) principal(aux) sont munis de façon classique et que donc :
a) la capacité de rétention capillaire du réservoir auxiliaire peut être juste celle suffisante pour supporter les accélérations pendant les manoeuvres de correction d'orbite, ce qui permet d'utiliser un dispositif à rétention capillaire de structure simple;
b) la capacité volumique d'ergol lié par des forces de capillarité dans ce dispositif de rétention simplifié peut être juste celle nécessaire pour assurer, avec marge, la déorbitation du satellite.

Le dispositif à rétention capillaire interne au réservoir auxiliaire doit pouvoir se remplir pendant les manoeuvres de correction d'orbite les plus longues (généralement les manoeuvres Nord-Sud). Pour cela, la forme du (ou des) réservoir(s) auxiliaire(s) est optimisée et le ou les réservoir(s) sont montés dans le satellite suivant une direction privilégiée (en pratique Nord-Sud) et les dimensions sont optimisées pour que la durée de vie résiduelle après détection de la vidange du réservoir principal soit la plus large possible (par exemple six mois à un an).

L'utilisation et la conception du (ou des) réservoir(s) auxiliaire(s) sont donc radicalement différents des divers dispositifs présentant des réservoirs montés en série et imaginés jusqu'ici, dont le brevet FR-2.537.544 où deux réservoirs principaux de volumes semblables sont montés en série, sans aucune zone de test intermédiaire, dans une configuration obligeant un écoulement vers le réservoir le plus un aval sous l'effet de l'accélération générée lors de la mise en orbite.

Selon des caractéristiques avantageuses de l'invention, éventuellement combinées :
- le dispositif de test de gaz comporte une zone de test faisant partie de la conduite aval, munie d'un élément de chauffage temporaire et d'un détecteur de température relié à un circuit de traitement ;
- ce circuit de traitement comporte un comparateur adapté à comparer la vitesse d'échauffement de la zone de test à une vitesse de référence intermédiaire entre les vitesses d'échauffement en présence de l'ergol, ou du gaz de pressurisation, respectivement ;
- la zone de test est une portion élargie de la conduite aval autour de laquelle est enroulée une résistance ;
- la capacité auxiliaire a un volume inférieur à 10% de celui de la capacité principale ;
- le volume de la capacité auxiliaire vaut entre 1 et 5% du volume de la capacité principale ;
- le second dispositif de rétention d'ergol à effet capillaire a une contenance en ergol au moins égale à la quantité d'ergol nécessaire à la déorbitation du satellite ;
- la contenance de ce second dispositif de rétention d'ergol est sensiblement comprise entre 0,5 et 3 litres ;
- il comporte en outre, entre la capacité principale et la capacité auxiliaire, un organe anti-retour d'ergol ;
- cet organe anti-retour est à effet capillaire ;
- cet organe anti-retour est monté entre le dispositif de test et la capacité auxiliaire ;
- un réchauffeur est monté sur la capacité principale ;
- la capacité principale comporte au moins deux réservoirs principaux montés en parallèle entre la conduite amont et la conduite aval ;
- une capacité additionnelle est montée dans la conduite amont, en communication avec l'intérieur de la capacité principale au travers seulement d'un séparateur de phase à action capillaire ;
- cette capacité additionnelle est équipée d'un réchauffeur ;
- il comporte, pour un second ergol, une seconde conduite amont, une seconde conduite aval connectée à un second collecteur de distribution d'ergol, et une seconde capacité principale montée entre ces secondes conduites amont et aval ;
- sur la seconde conduite aval sont prévus un second dispositif de test de gaz et une seconde capacité auxiliaire ;
- la seconde capacité principale est en communication libre et directe avec le second collecteur de distribution d'ergol ;
- la capacité auxiliaire est montée en sorte que ses orifices d'entrée et de sortie soient alignés selon une direction prédéterminée d'accélération maximum en cours ;
- cette capacité auxiliaire est montée parallèlement à l'axe Nord-Sud du satellite.

Des objets, caractéristiques et avantages de l'invention ressortent de la description qui suit, donnée à titre d'exemple non limitatif, en regard des dessins annexés sur lesquels :
- la figure 1 est une vue de principe d'un dispositif d'alimentation en ergol conforme à l'invention ;
- la figure 2 est une vue de détail du dispositif de test de la figure 1, avec son circuit de traitement ;
- la figure 3 est un graphique sur lequel est fondé le fonctionnement de ce dispositif de test ;
- la figure 4 est un schéma de principe du circuit de traitement de la figure 2 ;
- la figure 5 est une vue agrandie du réservoir auxiliaire de la figure 1 avec son dispositif de rétention simplifié ;
- la figure 6 est une vue partielle agrandie de ce dispositif de rétention simplifié ;
- la figure 7 est une vue schématique partielle d'une variante de réalisation du dispositif de la figure 1 ;
- la figure 8 en est une autre variante ;
- la figure 9 est une vue de détail du dispositif anti-retour d'ergol des figures 8 et 9 ;
- la figure 10 est une vue schématique d'un dispositif d'alimentation à deux ergols selon un premier mode de réalisation de l'invention ;
- la figure 11 est une vue analogue selon un second mode de réalisation ;
- la figure 12 est une vue schématique d'une variante de réalisation du dispositif de la figure 1 ; et
- la figure 13 est un schéma d'implantation du réservoir auxiliaire de la figure 1 dans un satellite stabilisé en attitude sur une orbite.

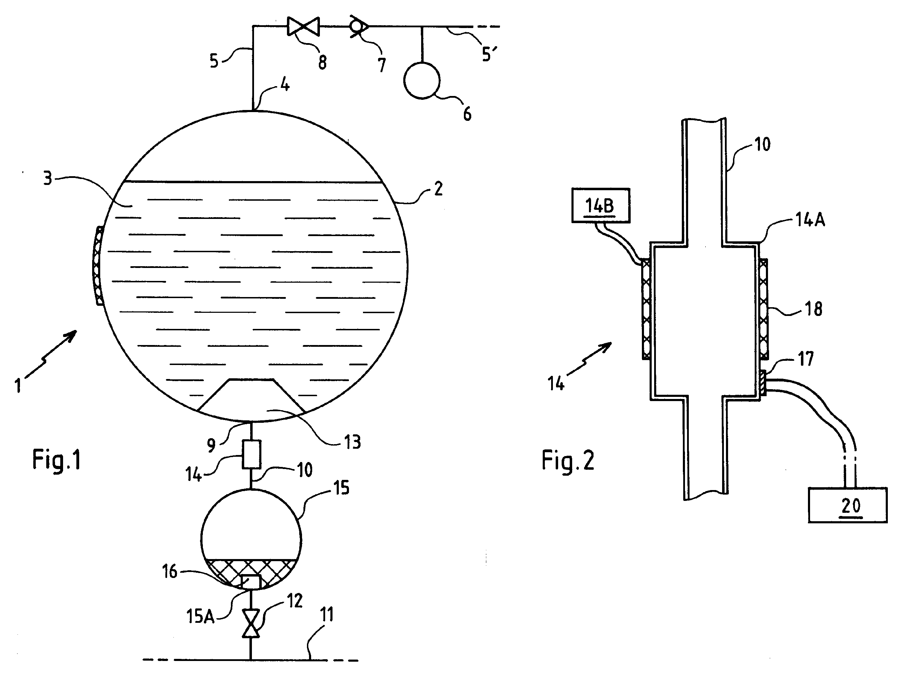

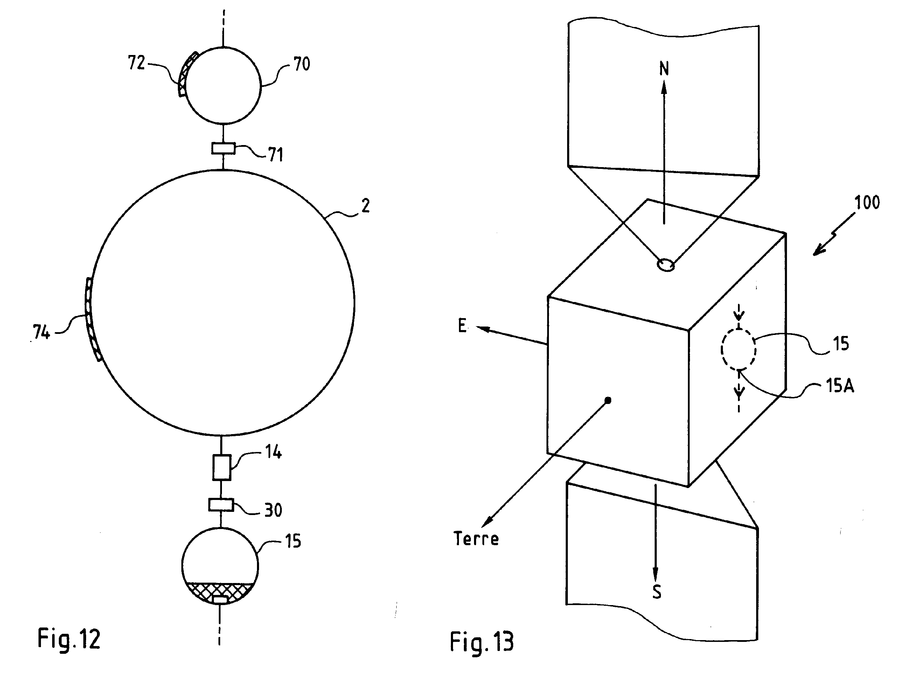

Le dispositif d'alimentation en ergol représenté à la figure 1 sous la référence générale 1 est destiné à contenir l'un des ergols liquides nécessaires, aussi bien à l'injection d'un satellite (voir la figure 13) sur son orbite, que, par la suite, à son maintien à poste et aux corrections de son attitude. On parle alors de système "unifié" de propulsion. Les ergols liquides utilisés sont le plus souvent du péroxyde d'azote (N₂0₄) et de la monométhylhydrazine (MMH).

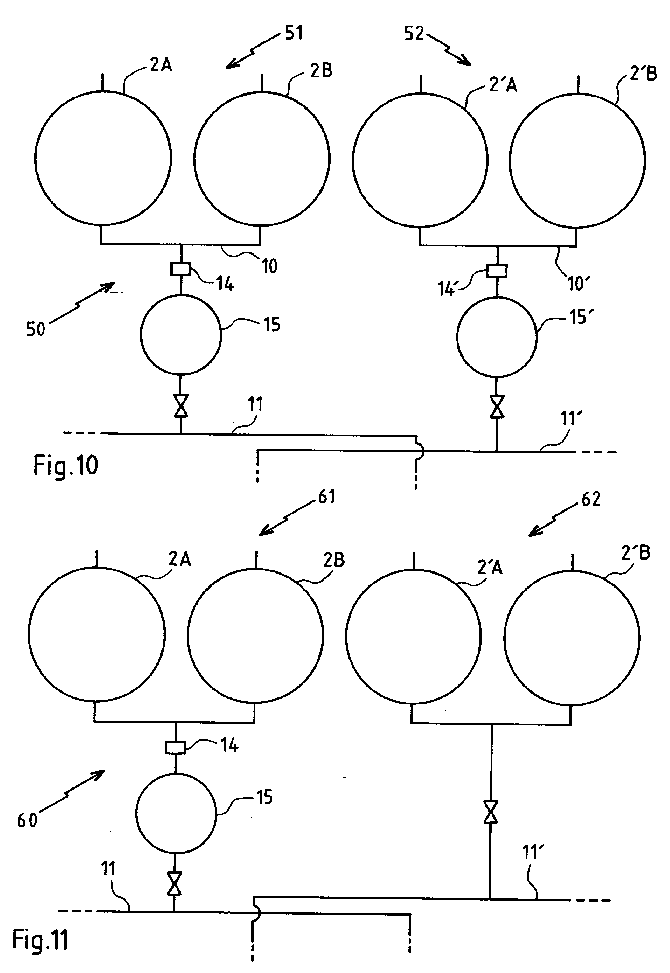

Le dispositif d'alimentation 1 comporte une capacité principale ici formée d'un réservoir principal 2 destiné à contenir, au lancement, l'essentiel de l'ergol 3 considéré. En variante représentée aux figures 10 et 11, le dispositif d'alimentation peut être formé de deux réservoirs principaux 2A et 2B montés en parallèle.

Ce réservoir 2 comporte un orifice amont 4 relié par une conduite amont 5 à une source de gaz de pressurisation 6, telle qu'un réservoir d'hélium sous très haute pression (quelques centaines de bars), suivie d'un détendeur non représenté. Dans cette conduite amont est en pratique prévu un organe anti-retour 7 et généralement une vanne 8.

En pratique, la source de gaz de pressurisation 6 peut être commune à deux dispositifs d'alimentation en ergol (voir aussi les figures 10 et 11), en étant raccordée à une autre conduite amont 5'.

Le réservoir 2 comporte également un orifice aval 9 raccordé à une conduite aval 10 aboutissant à un collecteur 11 de distribution connecté au moteur d'apogée et aux diverses tuyères (non représentés) dont le satellite est muni pour sa propulsion. Cette conduite aval 10 est en pratique munie d'une vanne 12.

De manière classique, le réservoir contient, connecté à l'orifice aval, un dispositif 13 de rétention d'ergol à effet capillaire.

Les dispositions précitées sont classiques.

Selon l'invention, le dispositif d'alimentation 1 comporte dans sa conduite aval un dispositif de test 14 de faible volume puis une capacité auxiliaire, ici un réservoir auxiliaire 15 sensiblement plus petit que le réservoir principal et muni à sa sortie 15A d'un dispositif simplifié 16 de rétention d'ergol à effet capillaire.

Le dispositif de test 14 est en fait un détecteur de gaz. Il est constitué d'une zone de test 14A, parcourue par le fluide s'écoulant depuis le réservoir principal 2 jusqu'au réservoir auxiliaire 15, équipée d'un organe électrique de mesure 17 à effet thermique dont la mesure de sortie est sensiblement différente selon que le fluide est du liquide ou du gaz.

La zone de test 14A est, à la figure 2, un tronçon élargi de la conduite aval 10 entouré par une résistance chauffante 18 alimentée de façon temporaire et cyclique par un circuit de commande 14B (en pratique de faible puissance, typiquement de l'ordre de 0,1 W) ; l'organe électrique de mesure est un détecteur de température monté auprès de ce tronçon élargi, et dont le signal de mesure est appliqué à un circuit de traitement 20.

En variante non représentée, ce dispositif de test comporte une thermistance ou un thermocouple.

En pratique, le signal de sortie de l'organe de mesure est une tension V.

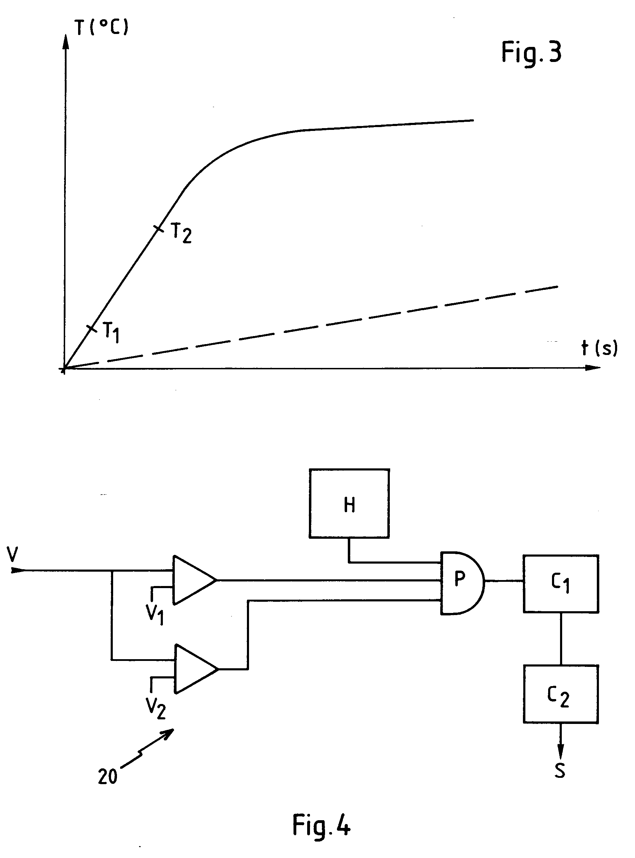

Un exemple de réalisation du circuit de traitement de la figure 2 embarqué à bord du satellite est donné à la figure 4.

Sur le graphique de la figure 3, obtenu par de simples calculs à la portée de l'homme de métier, est montré comment la différence de capacité thermique entre un liquide (courbe en tirets) et un gaz (courbe en traits pleins) se traduit, lorsqu'on chauffe la zone de test, par une différence de vitesse d'élévation de température. On observe en effet que pour un liquide l'échauffement est beaucoup plus faible qu'avec un gaz.

Si on prend donc deux valeurs de références T₁ et T₂ (ou en pratique les tensions correspondantes V₁ et V₂), on peut, à l'aide du schéma fonctionnel figure 4, obtenir un signal de sortie S retransmis par le satellite indiquant la présence ou non de gaz dans la zone de test; la tension instantanée V mesurée est en effet comparée aux valeurs de référence V₁ et V₂.

Dès que V₁ est atteint, la porte logique P laisse passer les impulsions de l'horloge H, qui sont accumulées dans le compteur C₁ et comparées à une valeur de référence (choisie de façon expérimentale) dans le comparateur C₂.

Dès que V₂ est atteint, la porte logique P est inhibée, le compteur C₁ ne s'incrémente plus. Le comparateur C₂ ne donne un signal S non nul que si la valeur de référence n'a pas été dépassée (cas d'une montée "rapide" en température caractéristique d'un état gazeux; sinon la montée est "lente" ce qui signifie qu'il y a encore un écoulement de liquide).

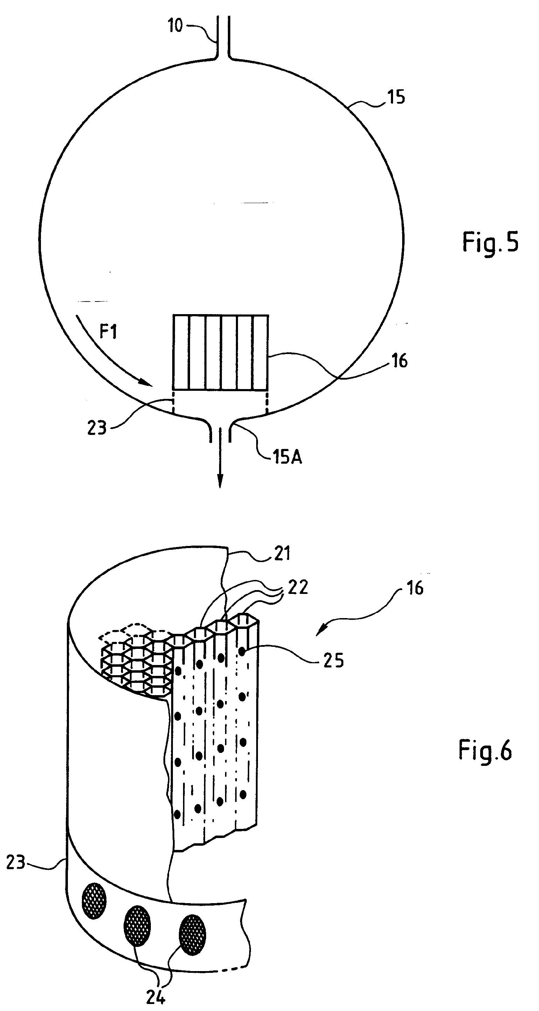

Le dispositif de rétention d'ergol auto-remplisseur 16 des figures 5 et 6 est capable, sous l'effet des forces d'inertie agissant lors de manoeuvres de correction d'orbite, de laisser entrer l'ergol dans la partie dotée de propriétés de rétention par capillarité et de l'y retenir, fonctionnant donc par analogie électrique comme une diode suivie d'une capacité. Le point de bulle de ce dispositif est en pratique assez bas, typiquement de l'ordre de 1 mbar.

On peut aussi utiliser un dispositif à rétention capillaire à plus haut point de bulle et lui faire occuper la majeure partie du réservoir auxiliaire, de manière à ne plus dépendre d'accélérations résultant de manoeuvres particulières.

Tel que représenté à la figure 6, ce dispositif se compose par exemple d'un cylindre 21 contenant des tubes métalliques 22 ici de forme hexagonale et dont la section est dimensionnée pour créer la pression de rétention capillaire nécessaire.

Ce cylindre 21 est fixé dans le réservoir auxiliaire du côté 15A où les ergols sont expulsés, et l'axe du cylindre est orienté dans la direction des accélérations moyennes créées lors des manoeuvres de correction d'orbite (Nord-Sud - voir la figure 13 - ou Est-Ouest).

La fixation du cylindre se fait au moyen d'une embase 23 elle-même perméable aux ergols, par le moyen de grilles 24 mais de capacité de rétention capillaire ("point de bulle") supérieure à celle du cylindre :
. la perméabilité aux ergols prend part à la fonction d'auto-remplissage pour les ergols descendant le long des parois (flèche F1) lors des manoeuvres de correction d'orbite,
. la capacité de rétention capillaire supérieure à celle du cylindre assure que le volume constitué du cylindre et de son embase se videra en commençant d'abord par le cyclindre.

Pour que la vidange du cylindre 21 se fasse de manière homogène, le passage de l'ergol d'un tube à l'autre est rendu possible par des ouvertures 25 pratiquées à l'intérieur du cylindre.

La capacité de ce dispositif 16 est en pratique celle suffisante pour assurer la déorbitation du satellite en fin de vie.

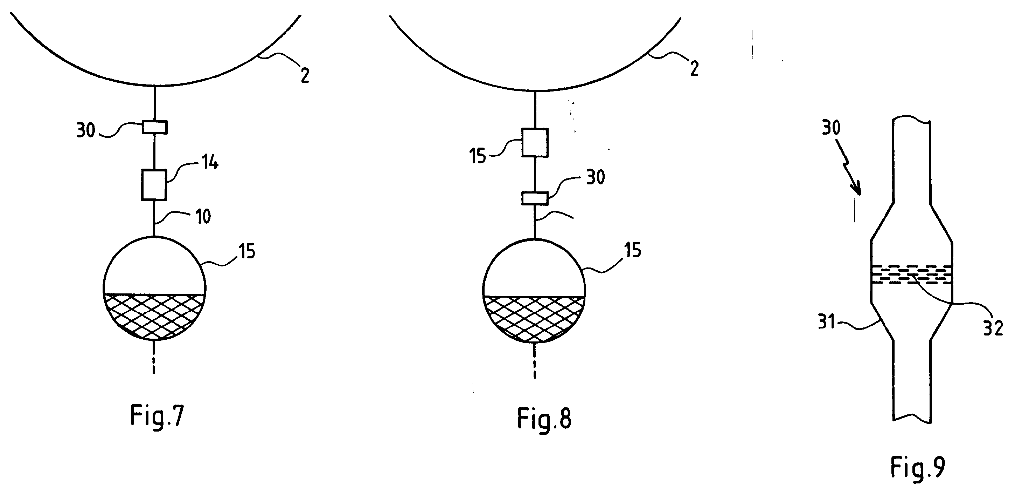

Les figures 7 et 8 sont des variantes de réalisation du dispositif de la figure 1 dans lesquelles, entre le réservoir principal et le réservoir auxiliaire, est prévu, en amont (figure 7) ou en aval (figure 8) de la zone de test, un dispositif anti-retour 30.

Tel que représenté à la figure 9, ce dispositif anti-retour est à action capillaire: il est formé d'un corps élargi 31 au travers duquel est disposée une (ou plusieurs) grille(s) 32 à mailles fines, les mailles de cette grille étant dimensionnées pour assurer en cas de reflux l'effet de barrage souhaité.

En variante, cet organe anti-retour peut être de type mécanique (clapet anti-retour classique) ou électromécanique (vanne...).

La figure 10 est un dispositif d'alimentation à deux ergols, désigné dans son ensemble par la référence 50 qui comporte deux branches parallèles 51 et 52, respectivement dédiées aux deux ergols, qui sont similaires chacune (mais avec deux réservoirs principaux) au dispositif à un ergol de la figure 1 (l'une des branches reprend les signes de référence de la figure 1; un indice "prime" est ajouté sur l'autre branche).

La figure 11 en est une variante 60 où seule l'une 61 des branches est conforme à l'invention, l'autre branche 62 étant de structure classique.

Le dispositif de la figure 12 se distingue de celui de la figure 1 par le fait que l'on a ajouté en série et en amont du réservoir principal un dispositif d'augmentation du volume réservé au gaz pressurisant constitué :
- d'un réservoir additionnel sans dispositif de rétention d'ergol 70 (son volume est par exemple entre 2% et 5% du volume du réservoir principal) ;
- d'un séparateur de phase à action capillaire 71 situé entre le réservoir additionnel et le réservoir principal (il s'agit d'éviter un reflux d'ergol vers l'amont).

En outre, on a ajouté sur le réservoir additionnel un réchauffeur 72 pour le maintenir à une température légèrement supérieure à celle du réservoir principal. Ce dernier peut toutefois lui aussi être équipé d'un réchauffeur 74 qui permet, en agissant sur la température et donc la pression régnant à l'intérieur des réservoirs principaux, d'empêcher l'ergol de retourner du réservoir auxiliaire vers le réservoir principal.

La figure 13 représente en partie un corps de satellite 100 dont un réservoir auxiliaire 15 est figuré en pointillés. Il est orienté selon l'axe Nord-Sud selon lequel sont appliqués les plus grandes accélérations (supérieures à celles selon l'axe Est-Ouest) lors du maintien à poste et des corrections d'attitude. Cela permet de mieux remplir le dispositif 16 de rétention d'ergol en fin de vie pendant les manoeuvres d'orbite.

L'invention peut notamment s'appliquer à des satellites des familles TV-SAT/TDF1 et EUTELSAT II.

A titre d'exemple, le (ou les) réservoir(s) principal(aux) a(ont) une contenance d'environ 1000 l, le réservoir auxiliaire a une contenance d'environ 20 litres (moins de 10% de la contenance principale) et le dispositif 16 a une contenance d'environ 1l (moins de 10% de la capacité auxiliaire) ; le réservoir additionnel a par exemple une capacité de 4 litres.

En pratique, l'essentiel de l'ergol disponible reste dans le réservoir principal pendant la majeure partie de la vie en orbite. Lorsque le dispositif de test de gaz 14 détecte la présence d'une quantité sensible de gaz dans la zone de test, le volume d'ergol contenu dans ce réservoir auxiliaire assure une durée de vie résiduelle prédéterminée, suivie d'une déorbitation. Il y a, pendant cette durée de vie résiduelle, des recharges successives du dispositif de rétention d'ergol du réservoir auxiliaire, à chaque manoeuvre Nord-Sud, suffisantes pour les manoeuvres de correction fine susceptibles de devoir être appliquées avant la prochaine manoeuvre Nord-Sud devant générer une accélération propre à recharger à nouveau ce dispositif de rétention auto-remplisseur.

Il est à la portée de l'homme de métier, en fonction de la place disponible, de décider du nombre et de la forme des réservoirs principaux.

Les matériaux constitutifs du réservoir auxiliaire et de l'organe anti-retour 30 doivent être aussi légers que possible et compatibles des points de vue mécanique et chimique avec les efforts à supporter et l'agressivité de l'ergol considéré. Il s'agit classiquement d'aciers inoxydables ou d'alliages de platine, ou de matières synthétiques appropriées connues en soi.

A titre d'exemple, les températures T₁ et T₂ sont égales à 30°C et 45°C et la vitesse de référence qui sert à distinguer les cas vide/plein d'ergol dans la zone de test est choisie égale à 0,6°C/s.

La fréquence d'activation du dispositif de test de gaz est en pratique celle des manoeuvres Nord-Sud de correction d'orbite.

Il va de soi que la description qui précède n'a été proposée qu'à titre d'exemple non limitatif et que de nombreuses variantes peuvent être proposées par l'homme de l'art sans sortir du cadre de l'invention. Ainsi en particulier, il peut y avoir deux ou plusieurs réservoirs additionnels montés en série. De même la conduite aval peut être dédoublée, avec deux dispositifs de test, dans le cas par exemple d'une capacité principale à deux réservoirs en parallèle.

## Revendications

1. Dispositif d'alimentation en ergol liquide pour satellite comportant, une conduite amont (5) connectée à une source de gaz de pressurisation, une conduite aval (10) connectée à un collecteur (11) de distribution d'ergol et une capacité principale (2, 2A, 2B, 2'A, 2'B) connectée en un orifice amont (4) à cette conduite amont et en un orifice aval (9) à cette conduite aval, et contenant un dispositif de rétention d'ergol à effet capillaire (13) entre l'intérieur de cette capacité principale et cette conduite aval, ce dispositif étant caractérisé en ce qu'il comporte en outre, sur la conduite aval, à partir de la capacité principale, un dispositif de test de gaz (14, 14') adapté à détecter la présence dans la conduite aval d'une quantité sensible de gaz, puis une capacité auxiliaire (15, 15') sensiblement plus petite que la capacité principale et comportant un deuxième dispositif de rétention d'ergol à effet capillaire (16) séparant l'intérieur de cette capacité auxiliaire et le collecteur de distribution.

2. Dispositif selon la revendication 1, caractérisé en ce que le dispositif de test de gaz (14, 14') comporte une zone de test (14A) faisant partie de la conduite aval, munie d'un élément de chauffage temporaire (18) et d'un détecteur de température (17) relié à un circuit de traitement.

3. Dispositif selon la revendication 2, caractérisé en ce que ce circuit de traitement comporte un comparateur (C2) adapté à comparer la vitesse d'échauffement de la zone de test à une vitesse de référence intermédiaire entre les vitesses d'échauffement en présence de l'ergol, ou du gaz de pressurisation, respectivement.

4. Dispositif selon la revendication 2 ou la revendication 3, caractérisé en ce que la zone de test (14) est une portion élargie (14A) de la conduite aval autour de laquelle est enroulée une résistance (18).

5. Dispositif selon l'une quelconque des revendications 1 à 4, caractérisé en ce que la capacité auxiliaire a un volume inférieur à 10% de celui de la capacité principale.

6. Dispositif selon la revendication 5, caractérisé en ce que le volume de la capacité auxiliaire vaut entre 1 et 5% du volume de la capacité principale.

7. Dispositif selon l'une quelconque des revendications 1 à 6, caractérisé en ce que le second dispositif de rétention d'ergol à effet capillaire a une contenance en ergol au moins égale à la quantité d'ergol nécessaire à la déorbitation du satellite.

8. Dispositif selon la revendication 7, caractérisé en ce que la contenance de ce second dispositif de rétention d'ergol est sensiblement comprise entre 0,5 et 3 litres.

9. Dispositif selon l'une quelconque des revendications 1 à 8, caractérisé en ce qu'il comporte en outre, entre la capacité principale et la capacité auxiliaire, un organe anti-retour d'ergol (30).

10. Dispositif selon la revendication 9, caractérisé en ce que cet organe anti-retour est à effet capillaire.

11. Dispositif selon la revendication 9 ou la revendication 10, caractérisé en ce que cet organe anti-retour est monté entre le dispositif de test et la capacité auxiliaire.

12. Dispositif selon l'une quelconque des revendications 1 à 11, caractérisé en ce qu'un réchauffeur (74) est monté sur la capacité principale.

13. Dispositif selon l'une quelconque des revendications 1 à 12, caractérisé en ce que la capacité principale comporte au moins deux réservoirs principaux (2A, 2B, 2'A, 2'B) montés en parallèle entre la conduite amont et la conduite aval.

14. Dispositif selon l'une quelconque des revendications 1 à 13, caractérisé en ce qu'une capacité additionnelle (70) est montée dans la conduite amont, en communication avec l'intérieur de la capacité principale au travers seulement d'un séparateur de phase à action capillaire (71).

15. Dispositif selon la revendication 14, caractérisé en ce que cette capacité additionnelle est équipée d'un réchauffeur (72).

16. Dispositif selon l'une quelconque des revendications 1 à 15, caractérisé en ce qu'il comporte, pour un second ergol, une seconde conduite amont (5'), une seconde conduite aval (10') connectée à un second collecteur de distribution d'ergol (11'), et une seconde capacité principale (2'A, 2'B) montée entre ces secondes conduites amont et aval.

17. Dispositif selon la revendication 16, caractérisé en ce que, sur la seconde conduite aval (10'), sont prévus un second dispositif de test de gaz (14') et une seconde capacité auxiliaire.

18. Dispositif selon la revendication 16, caractérisé en ce que la seconde capacité principale (62) est en communication libre et directe avec le second collecteur de distribution d'ergol.

19. Dispositif selon l'une quelconque des revendications 1 à 18, caractérisé en ce que la capacité auxiliaire est montée en sorte que ses orifices d'entrée et de sortie soient alignés selon une direction prédéterminée d'accélération maximum en cours.

20. Dispositif selon la revendication 19, caractérisé en ce que cette capacité auxiliaire est montée parallèlement à l'axe Nord-Sud du satellite.

## Patentansprüche

1. Zufuhrvorrichtung für flüssiges Ergol für Satelliten, mit einer Einlaßleitung (5), die mit einer Druckgasquelle verbunden ist, mit einer Auslaßleitung (10), die an einen Sammelbehälter (11) zur Verteilung von Ergol angeschlossen ist, und mit einem Hauptspeicher (2, 2A, 2B, 2'A, 2'B), der über eine Einlaßöffnung (4) mit dieser Einlaßleitung und über eine Auslaßöffnung (9) mit dieser Auslaßleitung verbunden ist und eine nach dem Kapillareffekt wirksame Ergol-Rückhalteeinrichtung (13) zwischen seinem Inneren und dieser Auslaßleitung enthält, wobei diese Vorrichtung **dadurch gekennzeichnet** ist, daß sie ferner an der vom Hauptspeicher ausgehenden Auslaßleitung eine Prüfvorrichtung (14, 14') für Gas aufweist, die dazu eingerichtet ist, in der Auslaßleitung das Vorhandensein einer merklichen Gasmenge zu detektieren, und außerdem einen Hilfsspeicher (15, 15') umfaßt, der wesentlich kleiner als der Hauptspeicher ist und eine zweite nach dem Kapillareffekt wirksame Ergol-Rückhalteeinrichtung (16) aufweist, die das Innere dieses Hilfsspeichers vom Verteilungs-Sammelbehälter trennt.

2. Vorrichtung nach Anspruch 1, dadurch gekennzeichnet, daß die Prüfvorrichtung (14, 14') für Gas eine Prüfzone (14A) aufweist, die Bestandteil der Auslaßleitung sowie mit einem Element zur zeitweisen Erwärmung (18) und mit einem Temperaturdetektor (17) versehen ist, der mit einer Verarbeitungsschaltung verbunden ist.

3. Vorrichtung nach Anspruch 2, dadurch gekennzeichnet, daß diese Verarbeitungsschaltung einen Komparator (C2) zum Vergleich der Erwärmungsgeschwindigkeit der Prüfzone mit einer Referenzgeschwindigkeit aufweist, wobei die Referenzgeschwindigkeit zwischen den Erwärmungsgeschwindigkeiten bei Vorhandensein von Ergol bzw. von Druckgas liegt.

4. Vorrichtung nach Anspruch 2 oder Anspruch 3, dadurch gekennzeichnet, daß die Prüfzone (14) ein verbreiterter Bereich (14A) der Auslaßleitung ist, um den herum ein Widerstand (18) gewickelt ist.

5. Vorrichtung nach einem der Ansprüche 1 bis 4, dadurch gekennzeichnet, daß der Hilfsspeicher ein Volumen aufweist, das kleiner als 10% des Volumens des Hauptspeichers ist.

6. Vorrichtung nach Anspruch 5, dadurch gekennzeichnet, daß das Volumen des Hilfsspeichers im Bereich von 1 bis 5 % des Volumens des Hauptspeichers liegt.

7. Vorrichtung nach einem der Ansprüche 1 bis 6, dadurch gekennzeichnet, daß die zweite nach dem Kapillareffekt wirksame Ergol-Rückhalteeinrichtung ein Fassungsvermögen an Ergol aufweist, das wenigstens gleich der Menge an Ergol ist, die erforderlich ist, um den Satelliten aus seiner Umlaufbahn zu bringen.

8. Vorrichtung nach Anspruch 7, dadurch gekennzeichnet, daß das Fassungsvermögen der zweiten Ergol-Rückhalteeinrichtung im wesentlichen im Bereich von 0,5 bis 3 Liter liegt.

9. Vorrichtung nach einem der Ansprüche 1 bis 8, dadurch gekennzeichnet, daß sie ferner zwischen dem Hauptspeicher und dem Hilfsspeicher ein Organ (30) aufweist, das den Rücklauf von Ergol verhindert.

10. Vorrichtung nach Anspruch 9, dadurch gekennzeichnet, daß das Organ zum Verhindern eines Rücklaufs nach dem Kapillareffekt arbeitet.

11. Vorrichtung nach Anspruch 9 oder Anspruch 10, dadurch gekennzeichnet, daß das Organ zum Verhindern eines Rücklaufs zwischen der Prüfvorrichtung und dem Hilfsspeicher eingebaut ist.

12. Vorrichtung nach einem der Ansprüche 1 bis 11, dadurch gekennzeichnet, daß ein Vorwärmer (74) am Hauptspeicher angebaut ist.

13. Vorrichtung nach einem der Ansprüche 1 bis 12, dadurch gekennzeichnet, daß der Hauptspeicher wenigstens zwei Hauptbehälter (2A, 2B, 2'A, 2'B) aufweist, die in Parallelschaltung zwischen der Einlaßleitung und der Auslaßleitung eingebaut sind.

14. Vorrichtung nach einem der Ansprüche 1 bis 13, dadurch gekennzeichnet, daß ein Zusatzspeicher (70) in der Einlaßleitung vorgesehen ist, der mit dem Inneren des Hauptspeichers nur über einen auf Kapillarwirkung arbeitenden Phasentrenner (71) in Verbindung steht.

15. Vorrichtung nach Anspruch 14, dadurch gekennzeichnet, daß dieser Zusatzspeicher mit einem Vorwärmer (72) ausgerüstet ist.

16. Vorrichtung nach einem der Ansprüche 1 bis 15, dadurch gekennzeichnet, daß sie für ein zweites Ergol eine zweite Einlaßleitung (5'), eine zweite Auslaßleitung (10'), die mit einem zweiten Sammelbehälter zur Verteilung von Ergol (11') verbunden ist, sowie einen zweiten Hauptspeicher (2'A, 2'B) aufweist, der zwischen der zweiten Einlaß- und der zweiten Auslaßleitung angebracht ist.

17. Vorrichtung nach Anspruch 16, dadurch gekennzeichnet, daß an der zweiten Auslaßleitung (10') eine zweite Prüfvorrichtung für Gas (14') und ein zweiter Hilfsspeicher vorgesehen sind.

18. Vorrichtung nach Anspruch 16, dadurch gekennzeichnet, daß der zweite Hauptspeicher (62) in freier und direkter Verbindung mit dem zweiten Sammelbehälter zur Verteilung von Ergol steht.

19. Vorrichtung nach einem der Ansprüche 1 bis 18, dadurch gekennzeichnet, daß der Hilfsspeicher so eingebaut ist, daß seine Einlaß- und Auslaßöffnung längs einer vorbestimmten Richtung maximaler Beschleunigung in der Bahn ausgerichtet sind.

20. Vorrichtung nach Anspruch 19, dadurch gekennzeichnet, daß dieser Hilfsspeicher parallel zur Nord-Süd-Achse des Satelliten eingebaut ist.

## Claims

1. Liquid propellant supply device for satellites comprising an upstream pipe (5) connected to a source of pressurising gas, a downstream pipe (10) connected to a propellant distribution manifold (11) and a main storage (2, 2A, 2B, 2'A, 2'B) connected at an upstream orifice (4) to this upstream pipe and at a downstream orifice (9) to this downstream pipe, and containing a capillary-action propellant retention device (13) between the interior of this main storage and this downstream pipe, this device being characterised in that it also comprises, on the downstream pipe, starting from the main storage, a gas test device (14, 14') adapted to detect the presence of a significant quantity of gas in the downstream pipe, and then an auxiliary storage (15, 15') substantially smaller than the main storage and including a second capillary-action propellant retention device (16) separating the interior of this auxiliary storage and the distribution manifold.

2. Device according to Claim 1, characterised in that the gas test device (14, 14') has a test area (14A) forming part of the downstream pipe and provided with a temporary heating unit (18) and with a temperature sensor (17) connected to a processor circuit.

3. Device according to Claim 2, characterised in that the processor circuit includes a comparator (C2) adapted to compare the rate of heating of the test area with a reference rate which is between the rates of heating in the presence of propellant and in the presence of pressurising gas respectively.

4. Device according to Claim 2 or Claim 3, characterised in that the test area (14) is an enlarged portion (14A) of the downstream pipe around which is wound an electrical resistance (18).

5. Device according to any one of Claims 1 to 4, characterised in that the auxiliary storage has a volume less than 10% of that of the main storage.

6. Device according to Claim 5, characterised in that the volume of the auxiliary storage is between 1 and 5% of the volume of the main storage.

7. Device according to any one of Claims 1 to 6, characterised in that the second capillary-action propellant retention device has a propellant capacity at least equal to the quantity of propellant needed to take the satellite out of orbit.

8. Device according to Claim 7, characterised in that the capacity of this second propellant retention device is substantially between 0.5 and 3 litres.

9. Device according to any one of Claims 1 to 8, characterised in that it also has, between the main storage and auxiliary storage, a non-return device (30) for the propellant.

10. Device according to Claim 9, characterised in that this non-return device has a capillary action.

11. Device according to Claim 9 or Claim 10, characterised in that this non-return device is mounted between the test device and the auxiliary storage.

12. Device according to any one of Claims 1 to 11, characterised in that a heater (74) is mounted on the main storage.

13. Device according to any one of Claims 1 to 12, characterised in that the main storage comprises at least two main tanks (2A, 2B, 2'A, 2'B) mounted in parallel between the upstream pipe and the downstream pipe.

14. Device according to any one of Claims 1 to 13, characterised in that an additional storage (70) is mounted in the upstream pipe, communicating with the interior of the main storage only through a capillary-action phase separator (71).

15. Device according to Claim 14, characterised in that this additional storage is equipped with a heater (72).

16. Device according to any one of Claims 1 to 15, characterised in that it has, for a second propellant, a second upstream pipe (5'), a second downstream pipe (10') connected to a second propellant distribution manifold (11'), and a second main storage (2'A, 2'B) mounted between these second upstream and downstream pipes.

17. Device according to Claim 16, characterised in that a second gas test device (14') and a second auxiliary storage are provided on the second downstream pipe (10').

18. Device according to Claim 16, characterised in that the second main storage (62) is in free and direct communication with the second propellant distribution manifold.

19. Device according to any one of Claims 1 to 18, characterised in that the auxiliary storage is so mounted that its inlet and outlet orifices are aligned in a predetermined direction of maximum acceleration in travel.

20. Device according to Claim 19, characterised in that this auxiliary storage is mounted parallel to the North-South axis of the satellite.
